**Europäisches Patentamt**

**European Patent Office**

**Office européen des brevets**

(19)

(11) Publication number : **0 532 637 B1**

# EUROPEAN PATENT SPECIFICATION

(12)

(45) Date of publication of patent specification :
22.03.95 Bulletin 95/12

(51) Int. Cl.⁶ : **G01N 23/04, H05G 1/26, G01V 5/00**

(21) Application number : **91911317.5**

(22) Date of filing : **07.06.91**

(86) International application number :
**PCT/US91/04030**

(87) International publication number :
**WO 91/19188 12.12.91 Gazette 91/28**

(54) **X-RAY IMAGE GENERATING APPARATUS AND ASSOCIATED METHOD.**

(30) Priority : **08.06.90 US 535179**

(43) Date of publication of application :
**24.03.93 Bulletin 93/12**

(45) Publication of the grant of the patent :
**22.03.95 Bulletin 95/12**

(84) Designated Contracting States :
**CH DE FR GB IT LI NL**

(56) References cited :
**EP-A- 0 138 486**
**US-A- 3 109 093**
**US-A- 4 430 568**

(73) Proprietor : **PAR TECHNOLOGY CORPORATION**
**PAR Technology Park,**
**220 Seneca Turnpike**
**New Hartford, NY 13413-1191 (US)**

(72) Inventor : **CAMBIER, James, L.**
**1205 North James Street**
**Rome, NY 13440 (US)**
Inventor : **PASIAK, David**
**194 West Bacon Street**
**Waterville, NY 13480 (US)**

(74) Representative : **Baillie, Iain Cameron**
**c/o Ladas & Parry**
**Altheimer Eck 2**
**D-80331 München (DE)**

EP 0 532 637 B1

## Description

## BACKGROUND OF THE INVENTION

### 1. Field of the Invention:

This invention relates to an x-ray generating apparatus which produces precise, short pulses of X-ray energy and can do so asynchronously. The X ray generating apparatus and associated method are also disclosed with respect to inspection of objects such as containers for products. An inspection is carried out utilizing computer image processing techniques to analyze an image produced using the X-ray pulses in order to detect foreign materials, defects and the like in the container, or to check for missing components.

### 2. Description of the Prior Art:

A critical step in the manufacturing of any type of consumer product, especially in the area of processed foods and medicines, is the inspection of containers to determine if there are defects, foreign materials or any undesired object present in any container. Foreign materials, such as broken glass or metal chips, if contained in processed foods are a serious threat to consumer health and safety. Thus, it is desirable that essentially every container that is manufactured and/or processed in a plant be inspected before leaving the plant. However, when a large number of containers are manufactured, it can be extremely time consuming and expensive to subject each container to a rigorous inspection.

One known technique of inspecting containers for defects involves sampling. This involves statistical techniques for estimating the presence or absence of foreign materials in packages by inspecting a statistically determined number of containers. Of course, this technique is not perfect as it is limited by the sampling nature of the technique, and inevitably some containers with defects will leave the plant and may eventually reach the consumer.

Alternatively, if equipment failure which could result in contamination is discovered at a manufacturing plant, all production is stopped and items generated subsequent to the last time the equipment was checked are quarantined. The items are then either destroyed or, in some cases, they are x-rayed and individually inspected to check for contaminants. This procedure can result in production delays and lost inventory.

Although it has been known to provide X-ray inspection of containers, the inspection of fast moving objects requires X-ray pulses of very short duration. It is known to provide precisely timed ultra-short X-ray pulses for various purposes. See United States Patent Nos. 2,879,404 and 3,103,591. These patents are primarily concerned with medical uses of X-ray technology, i.e., angiography, where it is desired to not only get high resolution pictures of moving blood vessels but also to limit patient dosages of X-rays.

It is also known to provide high voltage X-ray pulses in synchronization with a camera shutter, an AC cycle, or a pulse generator in the primary circuit of a transformer. See United States Patent Nos. 3,109,093, 3,294,973 and 4,614,999. These devices are not particularly useful when it is desired to generate pulses asynchronously in response to external events, such as the arrival of containers at an inspection point.

United States Patent 4,430,568, taken as the starting point for the independent claims 1, 4 and 8, shows an X-ray inspection system for automatic inspection to the contents of a container in which the image of the contents is processed by a computerized controller.

Despite these prior art method and devices, there remains a need for an efficient cost effective way to inspect every container on a high speed assembly line. There also remains a need for an X-ray pulse generator that is triggered by the arrival of the container to be inspected at the inspection position.

## SUMMARY OF THE INVENTION

It is a general object of the invention to provide an X-ray inspection system.

This and other objects are attained, in accordance with one embodiment of the invention by an apparatus for generating X-ray images of an object comprising an external signal generator for generating an external signal when said object is optimally positioned in a predetermined position; an X-ray generator operatively connected to said external signal generator for receiving said external signal and for generating an X-ray pulse in response to said external signal, said X-ray generator also having means for directing said X-ray pulse toward and impinging said X-ray pulse upon said object; means for receiving the portion of said X-ray pulse passing through said object, characterized by a DC power supply, and in that said X-ray generator is operatively connected to said DC power supply for generating a high energy short X-ray pulse; means for generating a digital image corresponding to X-ray radiation passing through said object, said digital image including a plurality of pixel blocks; means for selecting a minimum pixel intensity value from at least some of said pixel blocks of said digital image and creating digital image information based on said selected minimum pixel intensity values; and means for analyzing said digital image information and generating a responsive signal when the analysis results in the conclusion that a departure from a predetermined condition has been sensed.

Another embodiment of the invention includes a method of inspecting an object comprising the steps of generating an external signal in response to said object being in a predetermined optimal position; generating an X-ray pulse in response to said external signal and causing said X-ray pulse to impinge upon said object to provide information for creating an X-ray image of said object; characterized in that said X-ray pulse is a short high energy pulse and by the steps of converting X-ray radiation passing through said object into a visible light image; converting said visible light image into a digital image, said digital image including a plurality of pixel blocks; selecting a minimum pixel intensity value from at least some of said pixel blocks and creating digital image information based on said selected minimum pixel intensity value; and analyzing said digital image information using a pixel-by-pixel comparison of it to a predetermined condition and determining whether a departure from said condition has occurred.

A further embodiment of the invention comprises a method of inspecting an object comprising the steps of generating an external signal in response to said object being in a predetermined optimal position; generating an X-ray pulse in response to said external signal and causing said X-ray pulse to impinge upon said object to create an X-ray of said object characterized in that said X-ray pulse is a short high-energy pulse and by converting said X-ray image into a digital output image; convolving said output image with a first and a second mask; searching said output image to find an overall minimum pixel intensity value; and comparing said overall minimum pixel intensity value of said output image with a predetermined threshold value and generating a responsive signal when the comparison results in the conclusion that a departure from said predetermined threshold value has been sensed.

BRIEF DESCRIPTION OF THE DRAWINGS

Figure 1 is a schematic elevation of an inspection system in accordance with the present invention.

Figure 2 is a combined circuit and block diagram of one embodiment of suitable circuitry for the inspection system of the present invention.

Figure 3 is a flow chart of the image processing software of the present invention.

Figure 4 is a schematic diagram of the pixel blocks used to construct the output image for the present invention.

Figure 5A is a schematic illustration of an exemplary input image generated by the image processing device of the present invention.

Figure 5B is a schematic illustration of an exemplary output image generated by the image processing device of the present invention.

DESCRIPTION OF THE PREFERRED EMBODIMENTS

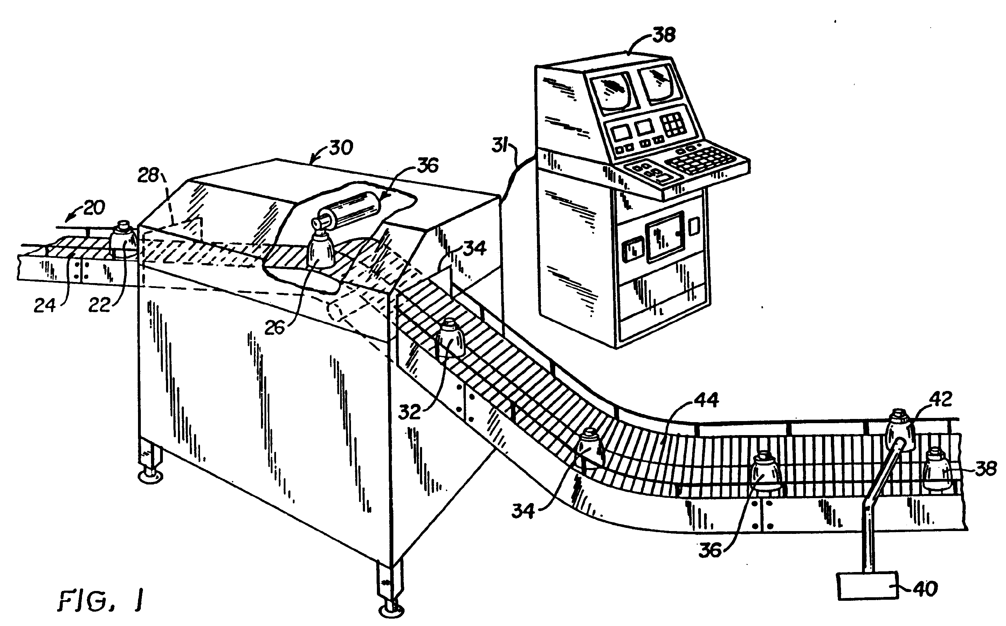

Referring to Figure 1, the inspection apparatus and associated X-ray generating apparatus are discussed in the context of a standard conveyor product line 20. It should be understood, however, that the present invention could be successfully employed in a variety of applications. Line 20 conveys incoming processed product containers 22 on conveyor belt 24 from another part of the assembly plant (not shown) to a point where the product containers such as container 22 will be packed for shipping. A standard conveyor typically operates at a rate of about 50 to 200 feet per minute (one foot = 0,3048 m). A filled sealed container 26 enters into one end 28 of an inspection station 30. After an inspection in accordance with the present invention as discussed more fully below, outgoing containers such as containers 32 exit through the opposite end 34 of station 30. Inspection station 30 contains X-ray generator 36 which directs an X-ray pulse at the container 26 when it arrives at the appropriate point of the inspection station 30.

An X-ray pulse is directed toward and impinged upon container 26 and the X-ray radiation is converted into an image and processed by circuitry in the following manner. A portion of the X-ray pulse generated by X-ray generator 36 passes through container 26. An image is generated and processed as discussed hereinafter. The processed image is compared, in the manner described herein, in control panel 38, which is connected to inspection station 30 as schematically depicted by connection lead 31. If an incoming container 26 does not conform to a predetermined standard a reject signal is emitted and an operator of control panel 38 can initiate a reject procedure of a type which would be readily understood by those skilled in the art. Alternatively, a reject device 40 may be provided to automatically remove rejected containers from the line. Preferably, reject device 40 is a pneumatically driven plunger assembly. Under such circumstances, device 40 pushes a rejected container 42 onto an alternative belt 44 from which the rejected container 42 may be collected and eliminated from the inventory to be packaged. Accepted containers 34, 36 and 38 continue on conveyor belt 24 to the packaging area (not shown). The system is capable of operating with conveyor belts which operate at typical container rates of up to about 1200 per minute.

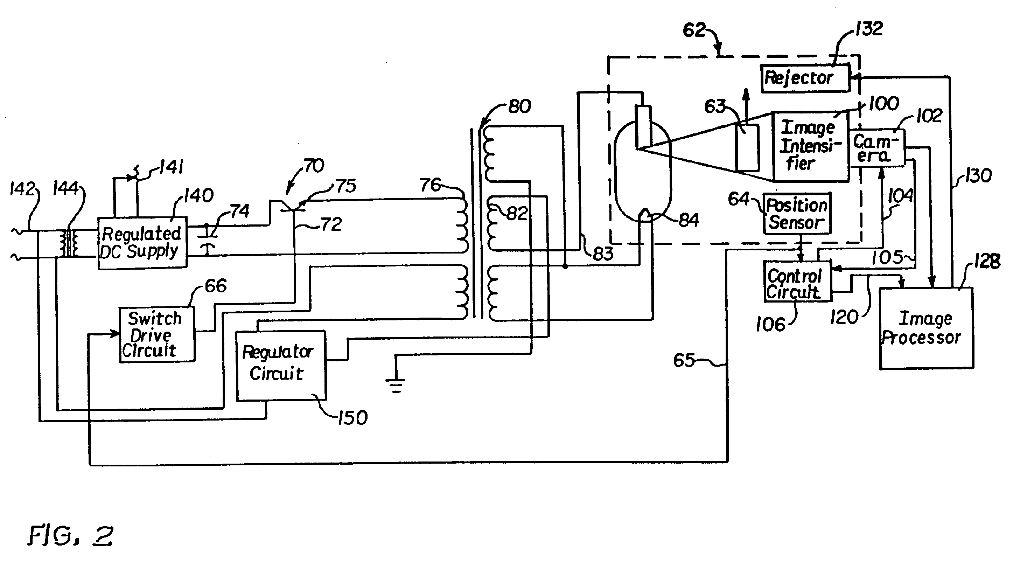

Referring to Figure 2, the inspection area is generally designated by dashed box 62. A position sensor 64, which is preferably a photosensor or a magnetic proximity switch generates a signal when the container 63 is optimally positioned. When the container 63 is optimally positioned, an X-ray pulse is directed toward it and impinged upon the container 63. When there is no container in position, then no X-ray pulse is produced by the system of the present invention.

The position sensor signal is transmitted by line 65 to a switch drive circuit 66. Switch drive circuit 66 is preferably an SN 74LS74 flip-flop and an SN 74LS393 counter which, as would be understood by those skilled in the art, produce a precisely timed TTL (transistor-transistor logic) pulse which in turn controls the switch drive circuit 66. Switch drive circuit 66 activates a high voltage switching transistor 70 at base 72. When high voltage switch 70 is activated, this allows charge stored in capacitor 74 to discharge. The current flowing into base 72 causes a much larger current to flow at emitter 75. The charge packet is delivered to primary winding 76 of high voltage transformer 80. This causes a high voltage pulse to be generated in the secondary 82 of the transformer 80. As used herein, a "high voltage" pulse is a pulse of between about 40 to 70 kilovolts. The pulse is applied by lead 83 to X-ray tube 84 to generate an X-ray pulse. The polarities of the transformer windings and of the current pulses may be arranged so that only voltage pulses of the correct polarity are applied to the tube 84 as appropriate to the particular circumstances in which the system is used. The pulses generated are of a short duration of between about 0.5 to 5.0 milliseconds, and preferably the pulses are of a duration between about 1.0 and 2.0 milliseconds.

The X-ray energy transmitted through the container 63 is detected by an image intensifier tube 100 and converted to a visible light image which is sensed by a video camera 102. A suitable camera 102 would be one which employs CID (charge injection device) technology. An example of a suitable camera is a CIDTEC Model 2505A2. As discussed hereinafter, the video image is then sent to image processor 128 which is a computer suitably programmed to digitize the signal and extract certain measurements which are compared to stored standard image measurements. If the measurement values are not within a range dictated by the stored standards, a rejection signal is generated by the image processor 128 and transferred by line 130 to a rejector 132 which removes container 63 from the line.

Camera 102 is gated through line 104 by control circuit 106. The gate signal transmitted by control circuit 106 inhibits readout of the stored charge pattern corresponding to an image. This inhibition is desirable because the readout process destroys the stored charge pattern (and thereby the image). As a result, it is preferred to inhibit the readout until the external image digitization device of image processor 128 is ready to store it in digital form.

In addition, as would be understood by those skilled in the art, image capture can begin only at the beginning of a video field, that is, immediately after the vertical retrace interval. For asynchronous image application as desired for purposes of the present invention, the gate signal is generated simultaneously with the X-ray pulse which is controlled by switch drive circuit 66. The gate signal continues until the beginning of the next vertical retrace pulse. This prevents loss of image data should the X-ray pulse occur in the middle of a video field. In addition, it allows the X-ray imaging pulse to be generated asynchronously and independent of the timing of the video signals. Camera 102 sends timing information through a sync line 105 in the form of the vertical retrace pulse as mentioned hereinbefore to control circuit 106. Control circuit 106 utilizes this information for the timing of the initiation and termination of the gate pulse. The timing information is also used by control circuit 106 to issue a trigger pulse to image processor 128 to trigger it to digitize the image.

The gate pulse is returned to its normal state at the beginning of a video field as stated hereinbefore. The two next following video fields contain the image information associated with the container 63 to be inspected. At the time the gate pulse returns to its normal state, a trigger signal is simultaneously transmitted across line 120 from control circuit 106 to image processor 128. This signal commands image processor 128 to digitize the next full field or frame, depending on the application of video information.

Image processor 128 performs the digitization function and thereafter performs a comparison function to compare the image of container 63 with the stored standard. The method of performing the comparison step is discussed more fully hereinbelow.

If a decision is made to reject the package, a reject signal is generated and transmitted by line 130 to the rejector 132. Depending on the type of container or item being inspected, rejector 132 may be a short duration jet of compressed air, a pneumatically actuated cylinder, or another electromechanical device. The preferred device for small glass containers is a vacuum starwheel as manufactured by Industrial Dynamics, Torrance, California or Peco Controls of Milpitas, California.

Turning more specifically to regulation of the X-ray pulses, control of the high voltage is accomplished by using a highly regulated DC power supply 140 which is preferably adjustable as indicated by reference character 141.

The regulated DC power supply 140 preferably consists of a full wave bridge rectifier using 80 VAC input, followed by a Motorola MC1466 monolithic voltage and current regulator manufactured by Motorola Corporation of Schaumburg, Illinois. This is a single integrated circuit which controls an external series pass transistor which is preferably a Motorola MJ413. The supply delivers about 0 to 80 volts DC at maximum current of about 0.5 amps.

Power to the DC supply 140 is provided by a standard AC line 142 which is rectified within DC supply 140 as indicated hereinbefore.

DC supply 140 allows capacitor 74 to be recharged to a fixed voltage level between pulses, so that the high voltage pulses generated in the secondary 82 of the transformer 80 will have constant amplitude which means that the X-ray pulses generated are of a substantially constant magnitude.

Current flowing into X-ray tube 84 is preferably regulated by regulator circuit 150. Regulator circuit 150 measures the current which flows through the X-ray tube 84 with each pulse by integrating the total current during the duration of the pulse. The integrated current is applied to a feedback control system which compares it to a reference current set by an adjust control which is included in regulator circuit 150. Any error which may be detected is corrected and the filament current of the X-ray tube 84 is thereby controlled.

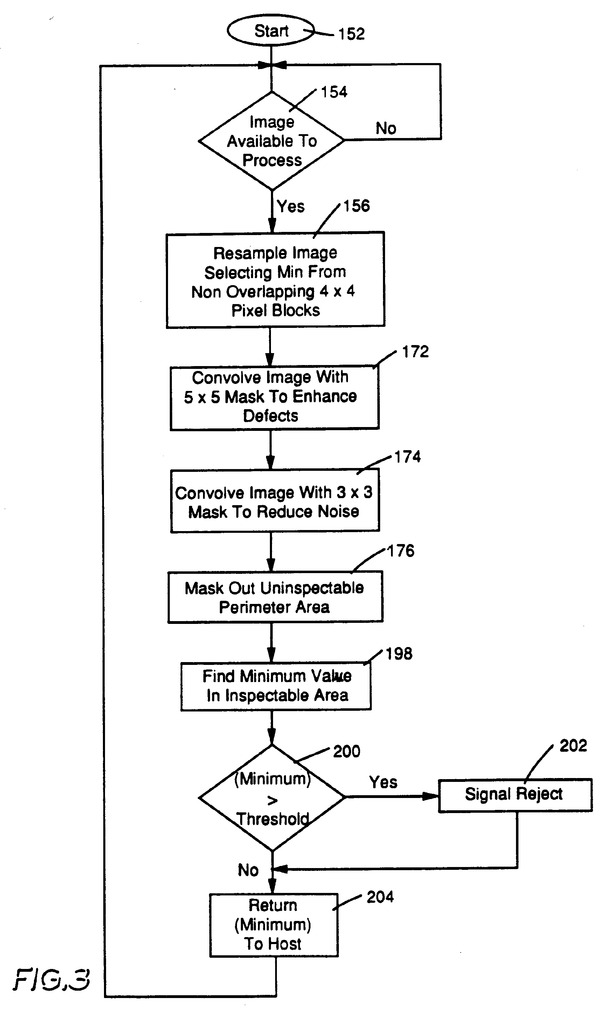

Referring now to Figure 3, the computer software used in image processor 128 of Figure 2 is described with reference to the flow chart (shown in Figure 3). A start function is initiated as depicted by reference character 152. Query 154 determines whether there is an image available to process. If the answer is no, the program returns to start 152. If the answer is yes, the program proceeds to step 156 where the image is resampled. A minimum image is created using preferably non-overlapping 4 X 4 pixel blocks.

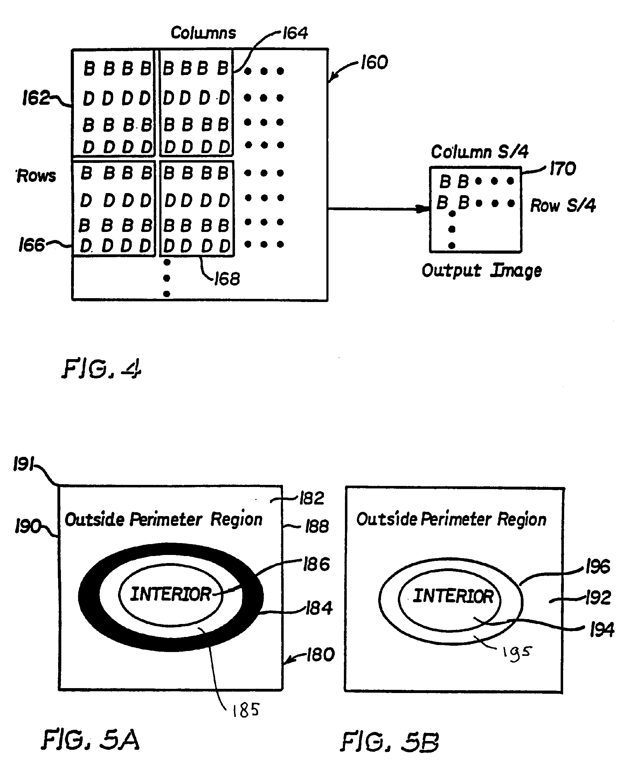

More specifically, as shown in Figure 4, the original digitized input image is shown schematically as large block 160. Image 160 is divided into 4 X 4 pixel blocks and several exemplary 4 X 4 blocks are depicted as shown by reference characters 162, 164, 166 and 168. Input image 160 is made up of approximately 10,000 of such 4 X 4 blocks. The minimum pixel from the bright video field of each 4 X 4 pixel block in the input image 160 is selected and used to construct the resampled output image 170. The bright video field designated "B" in Figure 4 is determined by comparing the pixel summations of odd-versus even-numbered rows from a 4 X 4 pixel block in the middle of the input image 160.

Referring again to the flowchart of Figure 3, after the image is resampled as discussed with reference to Figure 4, the method of the present invention includes step 172 in which the resampled image 170 is convolved with, preferably, a 5 X 5 mask to enhance defects. The enhance mask would preferably take the following form:

```
-0.04 -0.04 -0.04 -0.04 -0.04
-0.04 -1.04 -1.04 -1.04 -0.04
-0.04 -1.04 8.96 -1.04 -0.04
-0.04 -1.04 -1.04 -1.04 -0.04
-0.04 -0.04 -0.04 -0.04 -0.04
```

Thereafter, the image 170 which has been enhanced with the 5 x 5 mask is now convolved with preferably a 3 X 3 mask to reduce noise, and this step is depicted at block 174 of the flowchart. (Figure 3) The noise mask is preferably of the following form:

```
0.0 0.2 0.0
0.2 0.2 0.2
0.0 0.2 0.0
```

After noise reduction step 174, the method provides for masking out the uninspectable perimeter area as designated by reference character 176.

This step is best understood with reference to Figures 5A and 5B. In Figure 5A, the input image is designated by reference character 180. Outside perimeter region 182 is the area outside the image and would be grey in intensity. Dark elliptical boundary area 184 represents the boundary of the inspectable area as discussed hereinafter. Dark elliptical boundary area 184 and brighter elliptical area 185 are the result of the 5 x 5 enhance mask operation. The ellipse where boundary area 184 meets 185 represents the edge of the inspectable interior composed of regions 185 and 186. Brighter elliptical area 185 is brighter than both outside perimeter region 182 and interior 186. The interior 186 is of about the same intensity as outside perimeter region 182. A container would be moving across the field from left to right and the leading edge of the image is designated by reference character 188. The opposite edge is designated by reference character 190.

Referring still to Figures 5A and 5B, the method of the present invention includes starting analysis at the leading edge 188 of input image 180 and gradually moving towards the center. As this is done by processor 128, all or substantially all pixels along any given row are preferably masked out. That is, the masked out pixels are assigned a certain intensity from the outside perimeter area 182. This is done until the edge of the boundary area 184 is detected. Specifically, along any given row, the edge of area 184 is denoted by pixel intensity change from grey to black. When this change from grey to black is detected, the outside edge of area 184 is being detected. These pixels are masked out until the edge of area 185 is detected by a pixel intensity change of black to brighter grey. The pixel intensity in the upper lefthand corner 191 in the input image 180 is used to define the transition thresholds for the three regions as follows:

Grey to Black = first pixel intensity - CONSTANT

Black to Brighter Grey = first pixel intensity + CONSTANT

Comparing Figure 5A to 5B, the results of this function are shown. Outside perimeter region 192 of Figure 5B is typically of about the same intensity as interior 194. Brighter elliptical area 195 is the result of the enhance mask and it is still visible in Figure 5B. The edge 196 corresponds to the boundary between areas 184 and 185 of Figure 5A. In this way, the portions of the image which do not require inspection are masked out, and the inspection is conducted in the inspectable region composed of interior 194 and area 195.

Referring back to Figure 3, the uninspectable perimeter has now been masked out as indicated by step 176 of the flow chart. A minimum pixel intensity is found in the inspectable region composed of interior 194 and area 195 (Figure 5B), as designated by block 198 of the flowchart.

The absolute value of this minimum pixel intensity is compared to a standard threshold value, as depicted by reference character 200 (Figure 3). This is performed once for the entire image. If the actual minimum is outside of a predetermined threshold value, then the program commands that a reject signal be generated as depicted by reference character 202. If the minimum does not exceed the threshold then the program returns to start 152 and the container being inspected is not rejected. The predetermined threshold is determined by processing a large number of known acceptable containers, and analyzing the results using a statistical analysis as would be understood by those skilled in the art. It is preferred to construct a histogram of such minimum values and to determine the threshold from the histogram. The threshold is set so that only a small percentage of about less than 1.0 percent of the containers have a minimum intensity below the threshold. Using this method, glass fragments as small as about 0.050 inches long can be detected and metal fragments as small as about 0.020 inches (1 inch = 2,54 cm) long can be detected.

In accordance with the method of the present invention, containers which are to be inspected are placed on a conventional product container line 20 (Figure 1). The inspection of each container includes generating high energy short pulse X-rays towards each container as it arrives at the inspection point. Thereafter, an X-ray image representative of the container then being inspected is generated and a digital signal based on said X-ray image is then produced. The method further includes analyzing the digital signal on a pixel-by-pixel basis including comparison of it to a threshold standard. An accept or reject decision is made based on whether the actual signal is below the threshold and a decision command is generated based upon the analysis.

It should be appreciated that the present invention provides a method and apparatus for generating short-duration X-ray pulses suitable for X-ray imaging of fast-moving objects. The invention provides a low-cost pulsed X-ray source which uses standard X-ray components, yet can generate short-duration pulses in response to an asynchronous external trigger signal, while maintaining excellent voltage and current stability.

Although the invention has been described with reference to the inspection of containers, it should be understood that the X-ray pulse generator is useful in other applications such as inspection of materials for missing or misplaced parts, detection of defects in empty containers, or detection of contaminants in bulk (unpackaged) materials which may be passing by on a conveyor belt.

Whereas particular embodiments of the invention have been described hereinabove, for purposes of illustration, it will be evident to those skilled in the art that the invention is only limited by the scope of the appended claims.

## Claims

1. An apparatus for generating X-ray images of an object comprising:

an external signal generator (64) for generating an external signal when said object is optimally positioned in a predetermined position;

an X-ray generator (84) operatively connected to said external signal generator for receiving said external signal and for generating an X-ray pulse in response to said external signal, said X-ray generator also having means for directing said X-ray pulse toward and impinging said X-ray pulse upon said object;

means (100) for receiving the portion of said X-ray pulse passing through said object, characterized by:

a DC power supply (140), and in that said X-ray generator (84) is operatively connected to said DC power supply for generating said X-ray pulse in the form of a high energy short X-ray pulse;

means (128) for generating a digital image corresponding to X-ray radiation passing through said object, said digital image including a plurality of pixel blocks;

means (128) for selecting a minimum pixel intensity value from at least some of said pixel blocks of said digital image and creating digital image information based on said selected minimum pixel intensity values; and

means (128) for analyzing said digital image information and generating a responsive signal when the analysis results in the conclusion that a departure from a predetermined condition has been sensed.

2. The apparatus according to claim 1, characterized in that said X-ray generator generates X-ray pulses each having a duration of between about 0.5 and 5.0 milliseconds, in that said means for receiving the portion of said X-ray pulse passing through said object includes an image intensifier (100) that converts said X-ray radiation passing through said object to a visible light image and digitization means (128) which converts said visible light image to a digital image and in that said means for analyzing said digital image is a digital computer.

3. The apparatus according to claim 1, characterized in that said means for analyzing said digital image information includes means (128) for convolving said digital image information with a mask; comparison means (128) for comparing the minimum pixel intensity of said convolved digital image information with a predetermined threshold value; and means (128) for generating a command signal responsive to said comparison means, and in that said convolving means has means for convolving said digital image information with a mask having a predetermined matrix size.

4. A method of inspecting an object comprising the steps of:

generating an external signal in response to said object being in a predetermined optimal position;

generating an X-ray pulse in response to said external signal and causing said X-ray pulse to impinge upon said object to provide information for creating an X-ray image of said object;

characterized in that said X-ray pulse is a short high energy pulse and by the steps of:

converting X-ray radiation passing through said object into a visible light image;

converting said visible light image into a digital image, said digital image including a plurality of pixel blocks;

selecting a minimum pixel intensity value from at least some of said pixel blocks and creating digital image information based on said selected minimum pixel intensity value; and

analyzing said digital image information using a pixel-by-pixel comparison of it to a predetermined condition and determining whether a departure from said condition has occurred.

5. The method according to claim 4, characterized by analyzing said digital image information using the steps of;

convolving said digital image information with a first mask to enhance irregularities;

convolving said enhanced digital image information with a second mask to reduce noise;

searching said twice convolved digital image information to find an overall minimum pixel intensity value;

comparing said overall minimum pixel intensity value of said twice convolved digital image information with a predetermined threshold value; and

generating a command signal responsive to said comparison of said overall minimum pixel intensity value with said threshold value.

6. The method of claim 5, characterized by the steps of:

selecting said predetermined threshold value for said overall minimum pixel intensity value by processing a predetermined number of known acceptable objects, and determining a minimum value for each,

performing a statistical analysis of said minimum values, and selecting a predetermined threshold value based upon said statistical analysis,

conveying a plurality of objects in sequence and continuously generating and directing said X-ray pulses toward and impinging said pulses upon said objects and analyzing digital image information representative of each said object, and

generating and directing said X-ray pulses at said objects when said objects are in a position to receive said X-ray pulses.

7. The method according to claim 5, characterized in that said X-ray pulses have a duration of between about 0.5 to 5.0 milliseconds,

said first mask is selected has a dimension of 5 x 5,

said second mask has a dimension of 3 x 3.

8. A method of inspecting an object comprising the steps of:

generating an external signal in response to said object being in a predetermined optimal position;

generating an X-ray pulse in response to said external signal and causing said X-ray pulse to impinge upon said object to create an X-ray of said object characterized in that said X-ray pulse is a short high-energy pulse and by

converting said X-ray image into a digital output image;

convolving said output image with a first and a second mask;

searching said output image to find an overall minimum pixel intensity value; and

comparing said overall minimum pixel intensity value of said output image with a predetermined threshold value and generating a responsive signal when the comparison results in the conclusion that a departure from said predetermined threshold value has been sensed.

9. The method according to claim 8, characterized in that said convolving step comprises:

convolving said output image with a first mask to enhance irregularities and convolving said enhanced output image with a second mask to reduce electrical noise.

10. The method according to claim 8, characterized by selecting minimum pixel intensity values from a plurality of pixel blocks of said digital output image,

using said selected minimum pixel intensity values to represent said digital image information in said convolved output image,

selecting said predetermined threshold value for said overall minimum pixel intensity value by processing a predetermined number of known acceptable objects, and determining a minimum value for each and performing a statistical analysis of said minimum values, and selecting a predetermined threshold value based upon said statistical analysis.

11. The method according to claim 10, characterized by conveying a plurality of objects in sequence and continuously generating and directing said X-ray pulses toward and impinging said pulses upon said objects and analyzing digital image information representative of each said object,

generating and directing said X-ray pulses at said objects when said objects are in a position to receive said X-ray pulse, and

generating said X-ray pulses each having a duration of between about 0.5 and 5.0 milliseconds.

12. The method according to claim 9 characterized in that

said first mask has a dimension of 5 x 5, and

said second mask has a dimension of 3 x 3.

**Patentansprüche**

1. Vorrichtung zur Erzeugung von Röntgenbildern eines Objekts, mit:

einem externen Signalgenerator (64) zur Erzeugung eines externen Signals, wenn das Objekt an einer vorbestimmten Position optimal positioniert ist;

einem Röntgengenerator (84), der funktionsfähig mit dem externen Signalgenerator verbunden ist, um die externen Signale zu empfangen und um als Reaktion auf das externe Signal einen Röntgenimpuls zu erzeugen, wobei der Röntgengenerator ferner eine Einrichtung zur Richtung des Röntgenimpulses zu dem Objekt und zum Auftreffen des Röntgenimpulses auf dem Objekt umfaßt;

einer Einrichtung (100) zum Empfang des durch das Objekt verlaufenden Teils des Röntgenimpulses; gekennzeichnet durch:

eine Gleichstromquelle (140), und wobei

der Röntgengenerator (84) funktionsfähig mit der Gleichtstromquelle verbunden ist, um den Röntgenimpuls in Form eines kurzen Hochleistungsimpulses zu erzeugen;

eine Einrichtung (128) zur Erzeugung eines digitalen Bilds, das der durch das Objekt tretenden Röntgenstrahlung entspricht, wobei das digitale Bild eine Mehrzahl von Bildelementblöcken umfaßt;

eine Eirichtung (128) zur Auswahl eines minimalen Bildelementintensitätswertes aus wenigstens einigen der Bildelementblöcke des digitalen Bilds und zur Erzeugung von digitalen Bildinformationen auf der Basis der ausgewählten minimalen Bildelementintensitätswerte; und

eine Einrichtung (128) zur Analysierung der digitalen Bildinformationen und zur Erzeugung eines Ansprechsignals, wenn die Analyse zu der Schlußfolgerung führt, daß eine Abweichung von einem vorbestimmten Zustand wahrgenommen worden ist.

2. Vorrichtung nach Anspruch 1, dadurch gekennzeichnet, daß der Röntgengenerator Röntgenimpulse erzeugt, die jeweils eine Dauer von etwa 0,5 bis 5,0 Millisekunden aufweisen, und wobei die Einrichtung zum Empfang des durch das Objekt verlaufenden Teils des Röntgenimpulses einen Bildverstärker (100) umfaßt, der die durch das Objekt tretende Röntgenstrahlung in ein sichtbares Lichtbild konvertiert, und wobei eine Digitalisierungseinrichtung (128) das sichtbare Lichtbild in ein digitales Bild umwandelt, und wobei die Einrichtung zur Analysierung des digitalen Bilds einen Digitalrechner darstellt.

3. Vorrichtung nach Anspruch 3, dadurch gekennzeichnet, daß die Einrichtung zur Analysierung der digitalen Bildinformationen eine Einrichtung (128) zum Aufrollenündeln der digitalen Bildinformationen mit einer Maske umfaßt; eine Vergleichseinrichtung (128) zum Vergleich der minimalen Bildelementintensität der aufgerollten digitalen Bildinformationen mit einem vorbestimmten Grenzwert; und eine Einrichtung (128) zur Erzeugung eines Befehlssignals, das auf die Vergleichseinrichtung anspricht, und wobei die Aufrolleinrichtung eine Einrichtung zum Aufrollen der digitalen Bildinformationen mit einer Maske mit vorbestimmter Matrixgröße umfaßt.

4. Verfahren zur Untersuchung eines Objekts, wobei das Verfahren die folgenden Schritte umfaßt:

Erzeugung eines externen Signals als Reaktion auf die Anordnung des Objekts an einer vorbestimmten optimalen Position;

Erzeugung eines Röntgenimpulses als Reaktion auf das genannte externe Signal, und wobei dafür gesorgt wird, daß der Röntgenimpuls auf dem Objekt auftrifft, um Informationen zur Erzeugung eines Röntgenbilds des Objekts vorzusehen;

dadurch gekennzeichnet, daß es sich bei dem Röntgenimpuls um einen kurzen Hochleistungsimpuls handelt und ferner durch folgende Schritte:

Konvertierung der durch das Objekt tretenden Röntgenstrahlung in ein sichtbares Lichtbild;

Konvertierung des sichtbaren Lichtbilds in ein digitales Bild, wobei das digitale Bild eine Mehrzahl von Bildelementblöcken umfaßt;

Auswahl eines minimalen Bildelementintensitätswertes aus wenigstens einigen Bildelementblöcken und Erzeugung digitaler Bildinformationen auf der Basis des ausgewählten minimalen Bildelementintensitätswertes; und

Analyse der digitalen Bildinformationen durch bildelementweisen Vergleich mit einem vorbestimmten Zustand und Feststellung, ob eine Abweichung von dem genannten Zustand aufgetreten ist.

5. Verfahren nach Anspruch 4, gekennzeichnet durch die Analyse der digitalen Bildinformationen unter Verwendung der folgenden Schritte:

Aufrollen der digitalen Bildinformationen mit einer ersten Maske, um Unregelmäßigkeiten zu verschärfen;

Aufrollen der verschärften digitalen Bildinformationen mit einer zweiten Maske zur Rauschverminderung;

Absuchen nach den zweimal aufgerollten digitalen Bildinformationen, um einen minimalen Gesamt-Bildelementintensitätswert zu finden;

Vergleichen des minimalen Gesamt-Bildelementintensitätswertes der zweimal aufgerollten digitalen Bildinformationen mit einem vorbestimmten Grenzwert; und

Erzeugung eines Befehlssignals als Reaktion auf den Vergleich der zweimal aufgerollten digitalen Bildinformationen mit einem vorbestimmten Grenzwert.

6. Verfahren nach Anspruch 5, gekennzeichnet durch die folgenden Schritte:

Auswahl des vorbestimmten Grenzwerts für den minimalen Gesamt-Bildelementintensitätswert durch

Verarbeitung einer vorbestimmten Anzahl bekannter, zulässiger Objekte und Bestimmung eines minimalen Werts für jedes Objekt,

Ausführung einer statistischen Analyse der minimalen Werte und Auswahl eines vorbestimmten Grenzwerts auf der Basis der statistischen Analyse;

sequentielle Förderung einer Mehrzahl von Objekten und kontinuierliche Erzeugung und Richtung von Röntgenimpulsen zu den Objekten und Auftreffen der Impulse auf den Objekten sowie Analysierung der digitalen Bildinformationen, welche jedes genannte Objekt darstellen, und

Erzeugung und Richtung der Röntgenimpulse auf die Objekte, wenn sich diese an einer Position befinden, an der sie die Röntgenimpulse empfangen können.

7. Verfahren nach Anspruch 5, dadurch gekennzeichnet, daß die Röntgenimpulse eine Dauer zwischen etwa 0,5 bis 5,0 Millisekunden aufweisen, wobei die erste Maske mit einer Größe von 5 x 5 ausgewählt wird, wobei die zweite Maske eine Größe von 3 x 3 aufweist.

8. Verfahren zur Untersuchung eines Objekts, wobei das Verfahren die folgenden Schritte umfaßt:

Erzeugung eines externen Signals als Reaktion auf die Anordnung des Objekts an einer vorbestimmten optimalen Position;

Erzeugung eines Röntgenimpulses als Reaktion auf das externe Signal, und wobei dafür gesorgt wird, daß der Röntgenimpuls auf dem Objekt auftrifft, um ein Röntgenbild des Objekts zu erzeugen, dadurch gekennzeichnet, daß es sich bei dem Röntgenimpuls um einen kurzen Hochleistungsimpuls handelt und ferner durch folgende Schritte:

Konvertierung des Röntgenbilds in ein digitales Ausgangsbild;

Aufrollen des Ausgangsbilds mit einer ersten und einer zweiten Maske;

Absuchen des Ausgangsbilds, um einen minimalen Gesamt-Bildelementintensitätswert zu finden; und

Vergleich des minimalen Gesamt-Bildelementintensitätswertes des Ausgangsbilds mit einem Grenzwert und Erzeugung eines Ansprechsignals, wenn der Vergleich zu der Schlußfolgerung führt, daß eine Abweichung von dem vorbestimmten Grenzwert festgestellt worden ist.

9. Verfahren nach Anspruch 8, dadurch gekennzeichnet, daß der Aufrollschritt folgendes umfaßt:

Aufrollen des Ausgangsbilds mit einer ersten Maske, um Unregelmäßigkeiten zu verschärfen und Aufrollen des verschärften Ausgangsbilds mit einer zweiten Maske, um elektrisches Rauschen zu vermindern.

10. Verfahren nach Anspruch 8, gekennzeichnet durch die Auwahl minimaler Bildelementintensitätswerte aus einer Mehrzahl von Bildelementblöcken des digitalen Ausgangsbilds;

Verwendung der ausgewählten minimalen Bildelementintensitätswerte zur Darstellung der digitalen Bildinformationen in dem aufgerollten Ausgangsbild;

Auswahl eines vorbestimmten Grenzwertes für den minimalen Gesamt-Bildelementintensitätswert durch Verarbeitung einer vorbestimmten Anzahl zulässiger Objekte, und Bestimmung eines minimalen Wertes für jedes Objekt sowie Ausführung einer statistischen Analyse der minimalen Werte und Auswahl eines vorbestimmten Grenzwertes auf der Basis der statistischen Analyse.

11. Verfahren nach Anspruch 10, gekennzeichnet durch die sequentielle Förderung einer Mehrzahl von Objekten und die kontinuierliche Erzeugung und Richtung von Röntgenimpulsen zu den Objekten sowie Auftreffen der Röntgenimpulse auf diesen und Analysierung der jedes Objekt darstellenden digitalen Bildinformationen;

Erzeugung und Richtung der Röntgenimpulse auf die Objekte, wenn sich diese an einer Position befinden, an der sie die Röntgenimpulse empfangen können; und

Erzeugung der Röntgenimpulse, wobei jeder dieser Impulse eine Dauer zwischen etwa 0,5 bis 5,0 Millisekunden aufweist.

12. Verfahren nach Anspruch 9, dadurch gekennzeichnet, daß

die erste Maske eine Größe von 5 x 5 und die zweite Maske eine Größe von 3 x 3 aufweist.

**Revendications**

1. Appareil pour produire des images aux rayons X d'un objet, comprenant :

un générateur de signal externe (64) pour produire un signal externe lorsque ledit objet est positionné de façon optimale dans une position prédéterminée ;

un générateur de rayons X (84) connecté de manière fonctionnelle audit générateur de signal externe pour recevoir ledit signal externe et pour produire une impulsion de rayons X en réponse audit signal externe, ledit générateur de rayons X comportant également un moyen pour diriger ladite impulsion de rayons X vers, et pour projeter ladite impulsion de rayons X sur, ledit objet :

un moyen (100) pour recevoir la partie de ladite impulsion de rayons X traversant ledit objet, caractérisé par :

une alimentation de courant continu (140), et en ce que ledit générateur de rayons X (84) est connecté de manière fonctionnelle à ladite alimentation de courant continu pour produire ladite impulsion de rayons X sous la forme d'une impulsion de rayons X brève de haute énergie ;

un moyen (128) pour produire une image numérique correspondant au rayonnement de rayons X traversant ledit objet, ladite image numérique incluant plusieurs blocs de pixels ;

un moyen (128) pour sélectionner une valeur d'intensité de pixel minimale à partir d'au moins certains desdits blocs de pixels de ladite image numérique et pour créer une information d'image numérique en se basant sur ladite valeur d'intensité de pixel minimale sélectionnée ; et

un moyen (128) pour analyser ladite information d'image numérique et pour produire un signal de réponse si ladite analyse conclut qu'un départ à partir d'un état prédéterminé a été détecté.

2. Appareil selon la revendication 1, caractérisé en ce que ledit générateur de rayons X produit des impulsions de rayons X ayant chacune une durée allant d'environ 0,5 à 5,0 millisecondes, en ce que ledit moyen pour recevoir la partie de ladite impulsion de rayons X traversant ledit objet comprend un intensificateur d'image (100) qui convertit ledit rayonnement de rayons X traversant ledit objet en une image de lumière visible et un moyen de numérisation (128) qui convertit ladite image de lumière visible en une image numérique, et en ce que ledit moyen pour analyser ladite image numérique est un calculateur numérique.

3. Appareil selon la revendication 1, caractérisé en ce que ledit moyen pour analyser ladite information d'image numérique comprend : un moyen (128) pour effectuer une convolution de ladite information d'image numérique avec un masque ; un moyen de comparaison (128) pour comparer l'intensité de pixel minimale de ladite information d'image numérique convolutée avec une valeur de seuil prédéterminée ; et un moyen (128) pour produire un signal de commande réagissant audit moyen de comparaison, et en ce que ledit moyen de convolution comporte un moyen pour effectuer la convolution de ladite information d'image numérique avec un masque ayant une taille de matrice prédéterminée.

4. Procédé d'examen d'un objet, comprenant les étapes :

de production d'un signal externe en réponse au fait que ledit objet se trouve dans une position optimale prédéterminée ;

de production d'une impulsion de rayons X en réponse audit signal externe et de projection de ladite impulsion de rayons X sur ledit objet pour procurer de l'information pour créer une image aux rayons X dudit obget ;

caractérisé en ce que ladite impulsion de rayons X est une impulsion brève de haute énergie, et par les étapes :

de conversion dudit rayonnement de rayons X traversant ledit objet en une image de lumière visible ;

de conversion de ladite image de lumière visible en une image numérique, ladite image numérique incluant plusieurs blocs de pixels ;

de sélection d'une valeur d'intensité de pixel minimale à partir d'au moins certains desdits blocs de pixels et de création d'une information d'image numérique en se basant sur ladite valeur d'intensité de pixel minimale sélectionnée ; et

d'analyse de ladite information d'image numérique en utilisant une comparaison pixel par pixel de celle-ci à un état prédéterminé et de détermination du fait qu'un départ à partir dudit état s'est produit.

5. Procédé selon la revendication 4, caractérisé par l'analyse de ladite information d'image numérique en utilisant les étapes :

de convolution de ladite information d'image numérique avec un premier masque pour renforcer les irrégularités ;

de convolution de ladite information d'image numérique renforcée avec un second masque pour réduire le bruit ;

de recherche de ladite information d'image numérique convolutée deux fois, pour trouver une valeur d'intensité de pixel minimale globale ;

de comparaison de ladite valeur d'intensité de pixel minimale globale de ladite information d'image numérique convolutée deux fois avec une valeur de seuil prédéterminée ; et

de production d'un signal de commande sensible à ladite comparaison de ladite valeur d'intensité de pixel minimale globale avec ladite valeur de seuil.

6. Procédé selon la revendication 5, caractérisé par les étapes :

de sélection de ladite valeur de seuil prédéterminée pour ladite valeur d'intensité de pixel minimale globale en traitant un nombre prédéterminé d'objets acceptables connus, et en déterminant une valeur minimale pour chacun ;

d'exécution d'une analyse statistique desdites valeurs minimales, et de sélection d'une valeur de seuil prédéterminée en se basant sur ladite analyse statistique ;

de déplacement de plusieurs objets en séquence et en produisant et en dirigeant lesdites impulsions de rayons X vers, et projetant lesdites impulsions sur, lesdits objets, de manière continue, et en analysant l'information d'image numérique représentative de chacun desdits objets ; et

de production et de projection desdites impulsions de rayons X vers lesdits objets lorsque lesdits objets sont dans une position propre à recevoir lesdites impulsions de rayons X.

7. Procédé selon la revendication 5, caractérisé en ce que lesdites impulsions de rayons X ont une durée allant de 0,5 à 5,0 millisecondes ;

en ce que ledit premier masque est choisi avec une dimension de 5 x 5 ; et

en ce que ledit second masque a une dimension de 3 x 3.

8. Procédé d'examen d'un objet, comprenant les étapes :

de production d'un signal externe en réponse au fait que ledit objet se trouve dans une position optimale prédéterminée ;

de production d'une impulsion de rayons X en réponse audit signal externe et de projection de ladite impulsion de rayons X sur ledit objet pour procurer de l'information pour créer une image aux rayons X dudit objet ; caractérisé en ce que ladite impulsion de rayons X est une impulsion brève de haute énergie, et par :

la conversion de ladite image de rayons X en une image de sortie numérique ;

de convolution de ladite image de sortie avec un premier et un second masques ;

de recherche dans ladite image de sortie pour trouver une valeur d'intensité de pixel minimale globale ; et

de comparaison de ladite valeur d'intensité de pixel minimale globale de ladite image de sortie avec une valeur de seuil prédéterminée ; et

de production d'un signal de réponse lorsque la comparaison conclut qu'un départ à partir d'une valeur de seuil prédéterminée a été détecté.

9. Procédé selon la revendication 8, caractérisé en ce que ladite étape de convolution comprend :

la convolution de ladite image de sortie avec un premier masque pour renforcer les irrégularités, et la convolution de ladite image de sortie renforcée avec un second masque pour réduire le bruit électrique.

10. Procédé selon la revendication 8, caractérisé par la sélection de valeurs d'intensité de pixel minimale à partir de plusieurs blocs de pixels de ladite image de sortie numérique ;

l'utilisation desdites valeurs d'intensité de pixel minimale sélectionnée pour représenter ladite information d'image numérique dans ladite image de sortie convolutée ;

de sélection de ladite valeur de seuil prédéterminée pour ladite valeur d'intensité de pixel minimale globale en traitant un nombre prédéterminé d'objets acceptables connus et en déterminant une valeur minimale pour chacun et en effectuant une analyse statistique desdites valeurs minimales, et en sélectionnant une valeur de seuil déterminée en se basant sur ladite analyse statistique.

11. Procédé selon la revendication 10, caractérisé par déplacement de plusieurs objets en séquence et en produisant et en dirigeant lesdites impulsions de rayons X vers, et projetant lesdites impulsions sur, lesdits objets, de manière continue, et en analysant l'information d'image numérique représentative de chacun desdits objets ; et

de production et de projection desdites impulsions de rayons X vers lesdits objets lorsque lesdits objets sont dans une position propre à recevoir lesdites impulsions de rayons X ; et

en produisant lesdites impulsions de rayons X avec chacune une durée allant d'environ 0,5 à 5,0 millisecondes.

12. Procédé selon la revendication 9, caractérisé en ce que :

ledit premier masque a une dimension de 5 x 5 ; et

en ce que ledit second masque a une dimension de 3 x 3.

FIG. 1

EP 0 532 637 B1

FIG. 2

Start — 152

154

Image
Available To
Process — No

Yes — 156

Resample Image
Selecting Min From
Non Overlapping 4 x 4
Pixel Blocks

Convolve Image With
5 x 5 Mask To Enhance
Defects — 172

Convolve Image With 3 x 3
Mask To Reduce Noise — 174

Mask Out Uninspectable
Perimeter Area — 176

Find Minimum Value
In Inspectable Area — 198

(Minimum)
>
Threshold — 200 — Yes — Signal Reject — 202

No

Return
(Minimum)
To Host — 204

*FIG.3*

FIG. 4

FIG. 5A

FIG. 5B